(19) Europäisches Patentamt
European Patent Office
Office européen des brevets

(11) **EP 4 712 684 A1**

(12) **EUROPEAN PATENT APPLICATION**
published in accordance with Art. 153(4) EPC

(43) Date of publication:
**18.03.2026 Bulletin 2026/12**

(21) Application number: **23936609.9**

(22) Date of filing: **10.05.2023**

(51) International Patent Classification (IPC):
*H04W 84/06* (2009.01)   *H04W 8/22* (2009.01)
*H04W 16/26* (2009.01)   *H04W 56/00* (2009.01)

(52) Cooperative Patent Classification (CPC):
H04W 8/22; H04W 16/26; H04W 56/00;
H04W 84/06

(86) International application number:
**PCT/JP2023/017631**

(87) International publication number:
**WO 2024/232057 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **YOSHIOKA Shohei**
  **Tokyo 100-6150 (JP)**
• **KURITA Daisuke**
  **Tokyo 100-6150 (JP)**
• **NAGATA Satoshi**
  **Tokyo 100-6150 (JP)**
• **SUN Weiqi**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57)    A terminal can transmit and receive a radio signal via a relay device connected to a non-terrestrial network, or without the relay device. The terminal controls the transmission and reception of the radio signal via the relay device for a specific frequency cell.

FIG. 6

**Description**

TECHNICAL FIELD

This disclosure relates to a terminal and a radio communication method for performing radio communication via a non-terrestrial network and a relay device.

BACKGROUND ART

The 3rd Generation Partnership Project (3GPP, registered trademark) has set specifications for the 5th generation mobile communication system (5G, also known as New Radio (NR) or Next Generation (NG)), and is also proceeding with the next generation specification called Beyond 5G, 5G Evolution, or 6G.
For example, in 3GPP Release 17 and 18, regarding the use of a non-terrestrial network (NTN), it is assumed that a radio base station (gNB) and a terminal (User Equipment, UE) communicate directly via Spaceborne/Airborne means (hereinafter referred to as satellite) (Non-Patent Document 1).
In 3GPP Release 19 (6G) and thereafter, a more flexible network configuration is assumed, such that the gNB and UE communicate via a relay device (Network Controlled Repeater: NCR) installed on the ground in addition to the satellite. The UE only needs to perform an uplink (UL) transmission using the transmission power to reach the NCR, so it is expected to reduce power consumption and improve throughput.

CITATION LIST

NON-PATENT LITERATURE

Non-Patent Literature 1: 3GPP TS 38.331 V17.4.0, 3rd Generation Partnership Project; Technical Specification Group Radio Access Network; NR; Radio Resource Control (RRC) protocol specification (Release 17), 3GPP, March 2023

SUMMARY OF INVENTION

Due to significant delays in the NTN, Timing Advance (TA) control applied when the NTN is used is specified.
However, when an NCR is introduced in the NTN, it is assumed that the TA control described above will not operate normally if it is applied as it is.
Therefore, the following disclosure has been made in view of such a situation, and it is an object of the present disclosure to provide a terminal and a radio communication method capable of executing suitable synchronization processing even when an NCR is introduced in an NTN.
One aspect of the present disclosure is a relay device (NCR 300) including a reception unit (MT unit 310) that receives a notification related to at least one of beam control or a resource instruction; and a control unit (control unit 330) that applies a specific time offset in a case of routing via a non-terrestrial network as compared to a case of routing via a terrestrial network, and determines a timing to start or stop application of the notification.
One aspect of the present disclosure is a terminal including a transmission/reception unit (radio signal transmission/reception unit 210) that transmits and receives a radio signal via a relay device connected to a non-terrestrial network or without the relay device; and a control unit (control unit 270) that controls a transmission and reception of the radio signal via the relay device for a specific frequency cell.

BRIEF DESCRIPTION OF DRAWINGS

[FIG. 1] FIG. 1 is an overall schematic configuration diagram of a radio communication system 10.
[Fig. 2] FIG. 2 is a diagram illustrating a configuration example of radio frames, sub-frames, and slots used in the radio communication system 10.
[FIG. 3] FIG. 3 is a functional block configuration diagram of a gNB100 and UE 200.
[FIG. 4] FIG. 4 is a functional block configuration diagram of an NCR 300.
[FIG. 5] FIG. 5 is a diagram illustrating an application example of a time offset in Operation Example 1-1.
[FIG. 6] FIG. 6 is a diagram illustrating a usage example (part 1) of an NCR relay link in Operation Example 2.
[FIG. 7] FIG. 7 is a diagram illustrating a usage example (part 2) of an NCR relay link in Operation Example 2.
[FIG. 8] FIG. 8 is a diagram illustrating an example of a formula for calculating a TA value (when a direct link between satellite and UE is used).

[FIG. 9] FIG. 9 is a diagram illustrating an example of a formula for calculating a TA value (when an NCR relay link is used).

[FIG. 10] FIG. 10 is a diagram illustrating an example of a hardware configuration of the gNB 100, the UE 200, and the NCR 300.

[FIG. 11] FIG. 11 is a diagram illustrating a configuration example of a vehicle 2001.

DESCRIPTION OF EMBODIMENTS

An embodiment will be described below based on the drawings. The same functions and configurations are denoted by the same or similar reference signs, and their descriptions will be omitted, as appropriate.

(1) Overall Schematic Configuration of Radio Communication System

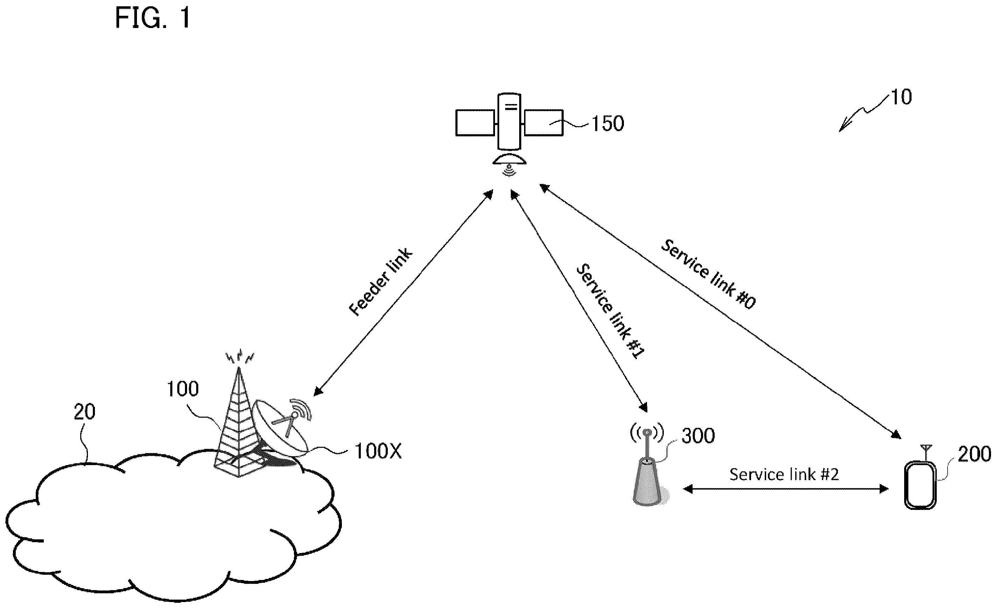

FIG. 1 is an overall schematic configuration diagram of a radio communication system 10 according to this embodiment. The radio communication system 10 is a radio communication system according to 5G New Radio (NR), and includes a Next Generation-Radio Access Network 20 (hereinafter referred to as NG-RAN 20) and a terminal 200 (hereinafter referred to as User Equipment: UE 200).

The radio communication system 10 may be a radio communication system according to a system called Beyond 5G, 5G Evolution, or 6G.

The NG-RAN 20 includes a radio base station 100 (hereinafter referred to as gNB 100). The specific configuration of the radio communication system 10 including the number of the gNBs 100 and the number of the UEs 200 is not limited to the example illustrated in FIG. 1.

The NG-RAN 20 includes a plurality of NG-RAN Nodes, specifically gNBs (or ng-eNBs), and is connected to a core network (for example, 5GC) according to 5G. The NG-RAN 20 and the core network may be simply described as a "network".

The gNB 100 is a radio base station according to 5G, and performs radio communication with the UE 200 according to 5G. The gNB 100 and the UE 200 can correspond to Massive MIMO (Multiple-Input Multiple-Output), which generates a beam BM with higher directivity by controlling a radio signal transmitted from a plurality of antenna elements, carrier aggregation (CA) using a plurality of component carriers (CC) bundled together, and dual connectivity (DC) simultaneously communicating between the UE and each of two NG-RAN nodes.

In embodiments, the radio communication system 10 may include a non-terrestrial network (hereinafter referred to as Non-Terrestrial Network: NTN). NTNs such as an artificial satellite 150 (hereinafter referred to as satellite 150) are utilized to provide services to areas that cannot be covered by terrestrial networks (hereinafter referred to as TN) due to cost or other reasons. The NTNs can provide more reliable services. For example, the NTNs may be applied to Internet of Things (IoT), ships, buses, trains, and critical communications. The NTNs also have efficient multicast or broadcast scalability.

It should be noted that a network including the gNB 100 and UE 200 and not including the satellite 150 may be referred to as the TN in contrast to the NTN. The satellite 150 may have a function of a gNB (radio base station). The type of the satellite 150 is not particularly limited, and may be, for example, a geostationary orbit satellite (GEO) or a low earth orbit satellite (LEO). Alternatively, a high-altitude platform station (HAPS) may be used. The satellite 150 is not necessarily limited to the satellites above, and may be interpreted to include spaceborne/airborne satellites.

In this embodiment, the gNB 100 may have an NTN gateway 100X. The NTN gateway 100X transmits a downlink signal to the satellite 150. The NTN gateway 100X receives an uplink signal from the satellite 150.

The satellite 150 relays a downlink signal received from the NTN gateway 100X to the UE 200. The satellite 150 relays an uplink signal received from the UE 200 to the NTN gateway 100X. The satellite 150 may be interpreted as a transmission-reception point (TRP), or as a repeater or relay.

In this embodiment, in addition to the satellite 150, the gNB 100 and UE 200 can communicate via a relay device installed on the ground, specifically, a network controlled repeater 300 (NCR 300). The NCR 300 can relay data transmitted and received between the gNB 100 and the UE 200. The NCR 300 may be interpreted as a repeater or relay that is assumed to be installed on the ground, and may be referred to as a relay node, radio communication node, communication device, network device, or the like. The NCR 300 can perform a UL transmission with a transmission power higher than the UE 200.

The radio link between the NTN gateway 100X and the satellite 150 may be called a feeder link (FL), and the radio link between the satellite 150 and the UE 200 or NCR 300, and the radio link between the UE 200 and the NCR 300, may be called service links (SL).

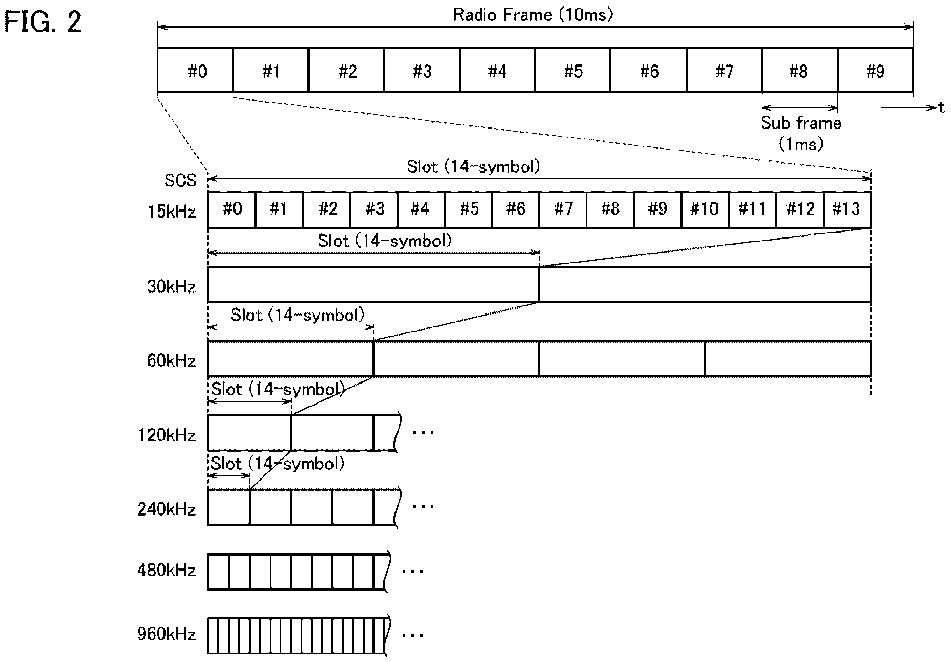

FIG. 2 illustrates a configuration example of radio frames, sub-frames, and slots used in the radio communication system 10.

As illustrated in FIG. 2, one slot consists of 14 symbols, and the larger (wider) the SCS, the shorter the symbol period (and slot period). The SCS is not limited to the intervals (frequencies) illustrated in FIG. 2. For example, 480 kHz or 960 kHz may be used.

Furthermore, the number of symbols constituting one slot is not necessarily 14 symbols (for example, 28 symbols or 56 symbols). Furthermore, the number of slots per sub-frame may be different depending on the SCS.

A time direction (t) illustrated in FIG. 2 may be called a time domain, a symbol period, a symbol time, or the like. A frequency direction may be called a frequency domain, a resource block, a subcarrier, a bandwidth part (BWP), or the like.

(2) Functional Block Configuration of Radio Communication System

Next, a functional block configuration of the radio communication system 10 will be described. Specifically, the functional block configurations of the gNB 100, UE 200, and NCR 300 will be described.

(2.1) gNB 100 and UE 200

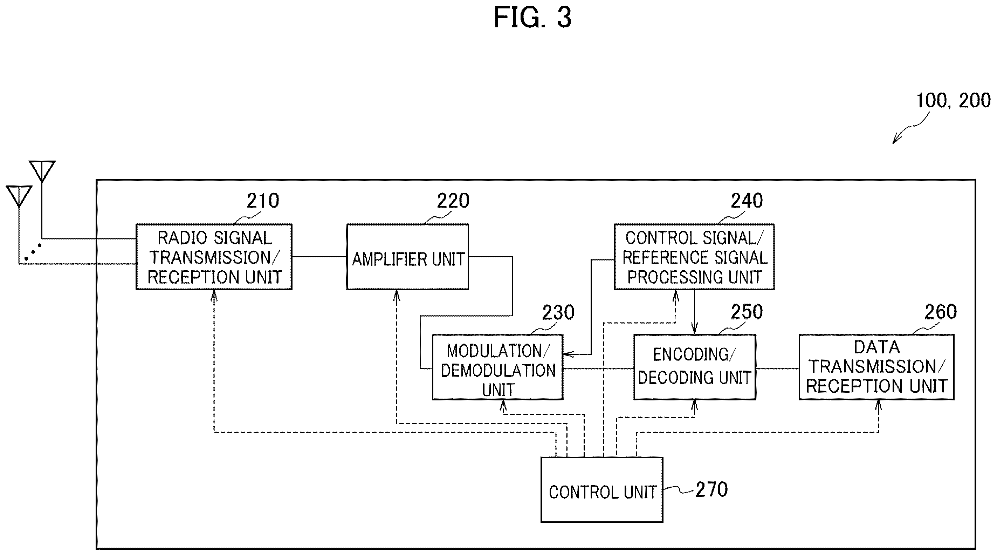

FIG. 3 is a functional block configuration diagram of the gNB 100 and UE 200. The UE 200 will be described below. As illustrated in FIG. 3, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

The radio signal transmission/reception unit 210 transmits and receives a radio signal in accordance with NR. The radio signal transmission/reception unit 210 corresponds to a Massive MIMO, a CA that uses multiple CCs bundled together, and a DC that performs simultaneous communication between the UE and each of two NG-RAN nodes.

In this embodiment, the radio signal transmission/reception unit 210 can transmit and receive a radio signal via the NCR 300 that is connected to a non-terrestrial network, or without the NCR 300. In this embodiment, the radio signal transmission/reception unit 210 may constitute a transceiver.

Specifically, the radio signal transmission/reception unit 210 can transmit and receive information using either a service link (service link #0, see FIG. 1) that is directly connected to the satellite 150, or a service link (see service link #1, 2, FIG. 1) that is connected to the satellite 150 via the NCR 300.

For example, the radio signal transmission/reception unit 210 may transmit and receive a radio signal via the NCR 300 only for UL, and may transmit and receive a radio signal without the NCR 300 for DL.

The radio signal transmission/reception unit 210 may receive information related to a timing adjustment value for a link (service link) between the NCR 300 and the satellite 150. Specifically, the radio signal transmission/reception unit 210 may receive a Timing Advance (TA) value applied to the NCR 300, the satellite 150, and the service link #2. The TA value may be a parameter given in the same format as a common TA parameter related to the feeder link.

Moreover, the radio signal transmission/reception unit 210 can transmit capability information indicating whether or not the UE 200 can transmit and receive a radio signal via the NCR 300. Specifically, the radio signal transmission/reception unit 210 can report to a network whether or not it has the capability to execute communication (UE Capability) via the service link (which may be called an NCR relay link) via the NCR 300.

An amplifier 220 includes a PA (Power Amplifier) / LNA (Low Noise Amplifier). The amplifier 220 amplifies a signal output from a modulation/demodulation unit 230 to a predetermined power level. The amplifier 220 also amplifies an RF signal output from the radio signal transmission/reception unit 210.

The modulation/demodulation unit 230 executes data modulation/demodulation, transmission power setting, resource block allocation, or the like, for each predetermined communication destination (such as the gNB 100). Cyclic Prefix-Orthogonal Frequency Division Multiplexing (CP-OFDM) / Discrete Fourier Transform-Spread (DFT-S-OFDM) may be applied to the modulation/demodulation unit 230. DFT-S-OFDM may be used not only for the uplink (UL), but also for the downlink (DL).

The control signal/reference signal processing unit 240 executes processes related to various control signals transmitted and received by the UE 200, and processes related to various reference signals transmitted and received by the UE 200.

Specifically, the control signal/reference signal processing unit 240 receives various control signals transmitted from the gNB 100 via a predetermined control channel, for example, control signals of a radio resource control layer (RRC). Further, the control signal/reference signal processing unit 240 transmits various control signals to the gNB 100 via a predetermined control channel.

The control signal/reference signal processing unit 240 executes processes using reference signals (RS) such as a Demodulation Reference Signal (DMRS) and a Phase Tracking Reference Signal (PTRS).

The DMRS is a known terminal-specific reference signal (pilot signal) between a terminal-specific base stations for estimating a fading channel used for data demodulation. PTRS is a terminal-specific reference signal for estimating phase noise, which is a problem in high frequency bands.

In addition to the DMRS and the PTRS, the reference signal may include a Channel State Information-Reference Signal (CSI-RS), a Sounding Reference Signal (SRS), and a Positioning Reference Signal (PRS) for positional information.

Further, the channel includes a control channel and a data channel. The control channel may include a PDCCH (Physical Downlink Control Channel), a PUCCH (Physical Uplink Control Channel), a RACH (Downlink Control Information (DCI) that includes Random Access Channel, and Random Access Radio Network Temporary Identifier (RA-RNTI)), and a Physical Broadcast Channel (PBCH).

The data channel may include a PDSCH (Physical Downlink Shared Channel), a PUSCH (Physical Uplink Shared Channel), or the like. Data may mean data transmitted via a data channel.

Data channels include a PDSCH (Physical Downlink Shared Channel) and a PUSCH (Physical Uplink Shared Channel). Data may mean data transmitted via a data channel, or data may mean user data.

The encoding/decoding unit 250 performs data division/concatenation and channel coding/decoding for each predetermined communication destination (the gNB 100 or other gNBs).

Specifically, the encoding/decoding unit 250 divides data output from the data transmission/reception unit 260 into pieces of data in predetermined sizes, and executes channel coding for the divided pieces of data. The encoding/-decoding unit 250 decodes data output from the modulation/demodulation unit 230, and concatenates the decoded data.

The data transmission/reception unit 260 performs transmission/reception with a Protocol Data Unit (PDU) and a Service Data Unit (SDU). Specifically, the data transmission/reception unit 260 performs assembling/disassembling of PDUs/SDUs in multiple layers (Media Access Control Layer (MAC), Radio Link Control Layer (RLC), Packet Data Convergence Protocol Layer (PDCP), and the like). Further, the data transmission/reception unit 260 performs data error correction and retransmission control based on a Hybrid Automatic Repeat request (ARQ).

The control unit 270 controls each functional block constituting the UE 200. In particular, in this embodiment, the control unit 270 executes control related to the service link via the NCR 300.

Specifically, the control unit 270 performs control to transmit and receive a radio signal via the NCR 300 for a cell of a specific frequency. The specific frequency may mean any frequency used by the cell (it may be a frequency band) or a combination of frequencies.

In the case of dual connectivity (DC), the control unit 270 may determine whether to route via the NCR 300 for a primary cell (PCell) or a secondary cell (SCell), or a master cell group or a secondary cell group.

For example, the control unit 270 may control the secondary cell or the secondary cell group to transmit and receive a radio signal via the NCR 300. The SpCell, specifically, the PCell and the primary secondary cell (PSCell) need not be controlled to transmit and receive a radio signal via the NCR 300.

The control unit 270 may control the transmission and reception of information related to an initial access via the NCR 300. Specifically, the control unit 270 may control the transmission and reception of Msg1 to 4 in a random access procedure through the service link via the NCR 300.

The control unit 270 may determine the timing adjustment value for the service link based on the information related to the timing adjustment value for the link (service link) between the NCR 300 and the satellite 150 received by the radio signal transmission/reception unit 210.

Specifically, the control unit 270 can determine the Timing Advance (TA) value to be applied to the NCR 300, the satellite 150, and the service link #2 based on the information related to the received TA value. A specific TA determination method (calculation method) will be described below.

(2.2) NCR 300

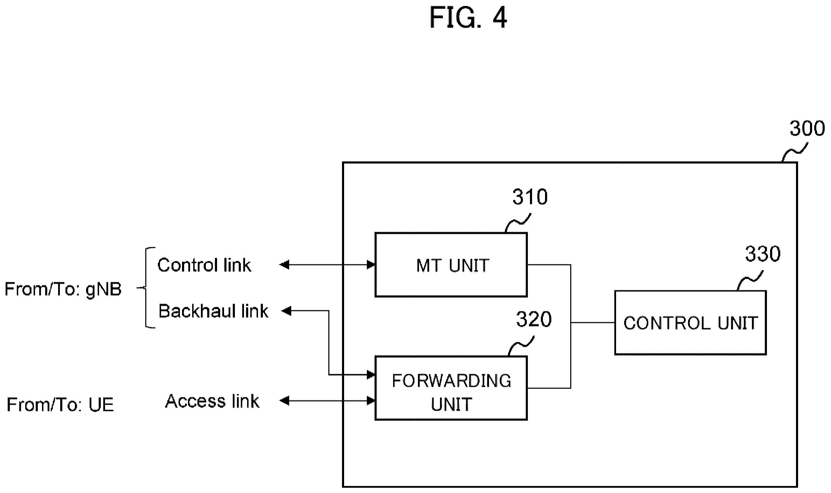

FIG. 4 is a functional block diagram of the NCR 300. As illustrated in FIG. 4, the NCR 300 includes a mobile termination unit 310 (hereinafter referred to as MT unit 310), a forwarding unit 320, and a control unit 330.

The MT unit 310 can be connected to the network (gNB 100) by executing the same operation as the UE 200. The MT unit 310 can transmit and receive signals to and from the gNB 100 via the satellite 150. Further, the MT unit 310 can receive control information (Side control information) applied to signal relay control between the gNB 100 and the UE 200.

In this embodiment, the MT unit 310 may receive notifications related to at least one of beam control or a resource instruction. In this embodiment, the MT unit 310 may constitute a reception unit.

Specifically, the MT unit 310 may receive a media access control layer control element (MAC-CE) including at least one of semi-static resource information or a beam instruction related to the access link (which may be called a service link) between the UE 200 and the NCR 300 via upper-layer signaling. An upper layer may include the MAC and/or the RRC.

Furthermore, the MT unit 310 may receive downlink control information (DCI) including at least one of dynamic resource information or a beam instruction regarding the access link between the UE 200 and the NCR 300. As the DCI format, information related to the access link may be provided, and the MT unit 310 may receive the information and instructions via, for example, DCI format 2_8 (a tentative name may be used).

The forwarding unit 320 executes signal relay between the gNB 100 and UE 200 based on the control information (Side control information). Specifically, the forwarding unit 320 relays the signal transmitted from the UE 200 to the gNB 100 via the satellite 150. The forwarding unit 320 relays the signal transmitted from the gNB 100 to the UE 200 via the satellite 150.

The control unit 330 controls the operation of the MT unit 310 and the forwarding unit 320. Specifically, the control unit 330 perform control related to the signal relay between the gNB 100 and the UE 200 based on the control information (Side control information) received by the MT unit 310.

The control unit 330 can perform beam control of a backhaul link (on the gNB 100 side) and the access link (on the UE 200 side). Further, the control unit 330 may execute DL/UL transmission/reception timing control and turn-on control (UL timing may be assumed to be aligned at a location of the NCR 300 for all UEs) only during transmission/reception. The control unit 330 may perform turn-off control automatically at the time of beam failure recovery (BFR). It should be noted that the backhaul link and the access link may be interpreted as a kind of service link when applied to the NTN.

When the MT unit 310 receives a notification related to beam control or a resource instruction from the network via the non-terrestrial network (NTN), the control unit 330 may apply a specific time offset to determine a timing to start or stop application of the notification as compared to a case of routing via the terrestrial network (TN).

Specifically, in a case of routing via the NTN, the control unit 330 may apply a longer time offset than in the case of routing via the TN to determine the timing to start or stop the application of the notification.

More specifically, when the control unit 330 receives a MAC-CE containing at least one of resource information or a beam instruction for the access link between the UE 200 and the NCR 300, it may apply the specific time offset to determine the timing to start or stop the application of the resource or beam.

In addition, when the control unit 330 receives a DCI (For example, DCI format 2_8) containing at least one of resource information or a beam instruction for the access link between the UE 200 and the NCR 300, it may apply the specific time offset to determine the timing to start or stop the application of the resource or beam. The calculation method of the time offset will be described below.

The control unit 330 may apply a coefficient related to the subcarrier spacing (SCS) to the specific time offset. Specifically, the control unit 330 may apply a different coefficient depending on the size of the SCS.

The control unit 330 may determine different timings for an UL and a DL. For example, the control unit 330 may determine a timing at which the notification is applied later for DL than for UL, or may determine reverse timings for DL and UL.

(3) Operation of the Radio Communication System

Next, operation of the radio communication system 10 will be described. Specifically, the operation related to communication between the gNB 100 and the UE 200 in a non-terrestrial network (NTN) via the NCR 300 will be described.

(3.1) Assumptions and Problems

As described above, in the radio communication system 10, the gNB 100 and the UE 200 can perform radio communication via the NCR 300 installed on the ground and the satellite (spaceborne/airborne). By routing via the NCR 300 in this manner, the UE 200 only need to transmit a radio signal with the transmission power reaching the NCR 300, and the power consumption can be reduced. That is, various UEs can use the NTN (for example, UE for IoT/Reduced UE Capability (RedCap)).

The NCR 300 can perform a UL transmission with a higher transmission power than the UE 200, so that the throughput performance of the UL can be greatly improved.

However, it is necessary to solve the following problems when communicating via the NCR 300 installed on the ground while using the NTN.

(i) Timing notification for beam control and resource indications should be adapted to the NTN.
Due to significant delays in NTN, timing notification functionality has been expanded in the specifications, but no NCR-related expansion has been made.
(ii) It is necessary to establish a synchronization mechanism that assumes routing via the NCR.
TA control using a satellite ephemeris and a common TA parameter in 3GPP Release 17, 18 NTN does not assume communication via NCR.
(iii) The UE 200 needs to determine whether to execute operation via the NCR, or without the NCR.

3GPP Release 17, 18 NTN specifies the synchronization establishment operation in the service link directly connected to the satellite 150 without the NCR 300, but it is necessary to switch between this operation and the synchronization establishment operation of (ii).

(3.2) Operation Examples

(3.2.1) Operation Example 1

This operation example corresponds to the problem (i) described above. The NCR 300 may apply a predetermined time offset for control over a given notification when routing via the NTN as comparing to a TN case.

(3.2.1.1) Operation Example 1-1

When the NCR 300 receives semi-static resource information and/or corresponding beam indications related to transmission and reception of the access link (the access link can be regarded as a service link, and hereinafter, the same applies) through the MAC CE command, the NCR 300 may apply a predetermined time offset to determine the timing to start/stop using the resource/beam.

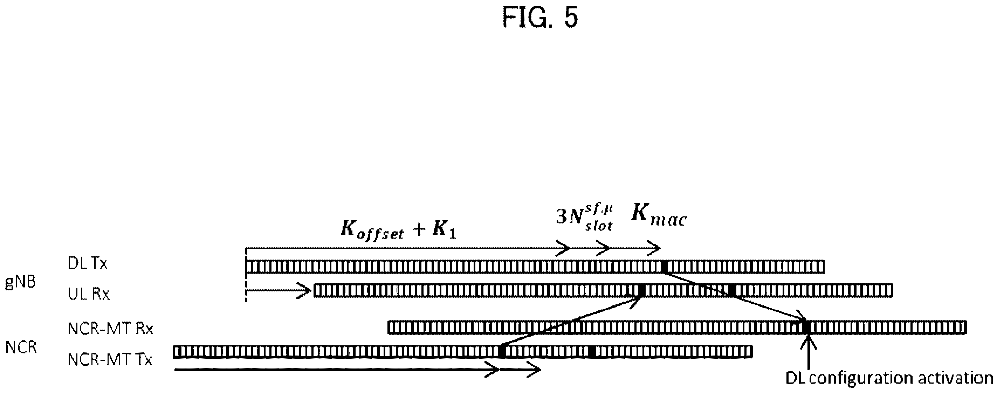

FIG. 5 illustrates an application example of a time offset in Operation Example 1-1. When the feedback timing to the MAC-CE command is k, the NCR 300 may start/stop the use of the resource/beam from the slot after the time calculated by Equation 1.

[Equation 1]

$$k + 3N_{slot}^{subframe,\mu} + \frac{2^{\mu}}{2^{\mu_{K_{mac}}}} \cdot k_{\mathrm{mac}}$$

The gNB 100 may recognize that a new setting has been applied on the NCR 300 side.

Here, the following Equation 2 corresponds to a predetermined time offset.

[Equation 2]

$$\frac{2^{\mu}}{2^{\mu_{K_{mac}}}} \cdot k_{\mathrm{mac}}$$

$k_{\mathrm{mac}}$ may be in units of slots. $k_{\mathrm{mac}}$ may be in common with, or different from, the parameters used to determine the application timing of control related to other MAC-CE commands. $k_{\mathrm{mac}}$ is a scheduling offset provided by a network when DL and UL frame timings are not adjusted in the gNB 100. $\mu$ indicates the SCS config related to PUCCH transmission.

As described above, the NCR 300 may make the application start/stop timing different between the DL and the UL.

(3.2.1.2) Operation Example 1-2

When the NCR 300 receives dynamic resource information and/or corresponding beam indications related to transmission/reception of the access link via the DCI (for example, DCI format 2_8), the NCR 300 may apply a predetermined time offset to determine the resource/beam to execute relay operation.

Specifically, when a slot next to the slot receiving the DCI is n, the NCR 300 may determine a resource to execute the relay operation based on the fact that "slotOffsetAperiodic" (slot) and "symbolOffset" (symbol) have elapsed from n, and then K_offset has elapsed.

Here, K_offset corresponds to a predetermined time offset. K_offset may be in units of slots. Note that K_offset may be multiplied by a coefficient related to the SCS. K_offset may be in common with, or different from, parameters used for timing determination related to other UL transmissions.

K_offset may be applied only to an UL transmission (UE-NCR-satellite-gNB). That is, K_offset need not be applied to an DL transmission (gNB-satellite-NCR-UE).

Alternatively, the NCR 300 may make the application start/stop timing different between DL and UL.

According to Operation Example 1, common understanding can be obtained as for when to execute the relay operation in the gNB 100 and the NCR 300. Thus, even when an NTN is used via the NCR 300, the NCR 300 can execute suitable relay operation.

(3.2.2) Operation Example 2

This operation example corresponds to the problems (ii) and (iii) described above. In this operation example, the NCR 300 may execute the relay operation only for a frequency related to a specific cell.

The following usage policy may be applied to the link via the NCR 300 (NCR relay link).

(a) The UE 200 connects with the network using a direct link with the satellite, and uses a relay link with the NCR 300 for the secondary cell (SCell)/secondary cell group based on the notification from the network.

(a1) The NCR 300 relays only the UL signal of the UE 200, and does not relay the DL signal (it may be treated as a Supplementary UL (SUL)).
(a2) The NCR 300 relays the DL and UL signals of the UE 200, but does not operate as a SpCell or PCell. The UE 200 may be notified that a PRACH transmission for an initial access is not possible in an SSB (SS(Synchronization Signal) / PBCH (Physical Broadcast Channel) Block) / MIB (Master Information Block) / SIB (System Information Block). This prevents the UE 200 from executing an initial access via the NCR 300.

Further, the UE 200 may use a direct link with the satellite to report information about the location of the UE 200 to the network.

Cells of a direct link and cells of an NCR relay link may be treated as different TAGs (Timing Advance Groups).

The UE 200 may send PUCCHs in cells using the NCR relay link. That is, assuming that the quality of the NCR relay link is better than that of the direct link with the satellite, PUCCH-Config may be set in a cell that is not a SpCell, and PUCCHs may be sent using the cell.

Thus, the NCR relay link can be effectively utilized, and problems caused by UEs that cannot use the NCR relay link can be avoided.

(b) The UE 200 determines whether to execute an operation related to an initial access on the NCR relay link based on a notification from the network.

An operation related to the NCR relay link may be instructed in the SSB/MIB/SIB, and only UE 200 capable of executing the operation may execute the connection operation to the cell (for example, a notification that a connection operation cannot be executed and a notification related to the exception processing of the notification may be transmitted). That is, UEs which cannot execute the operation (for example, legacy UEs up to 3GPP Release 17, 18) may not execute the connection operation to the cell. The reception of information in (c), which will be described below, may mean the operation instruction.

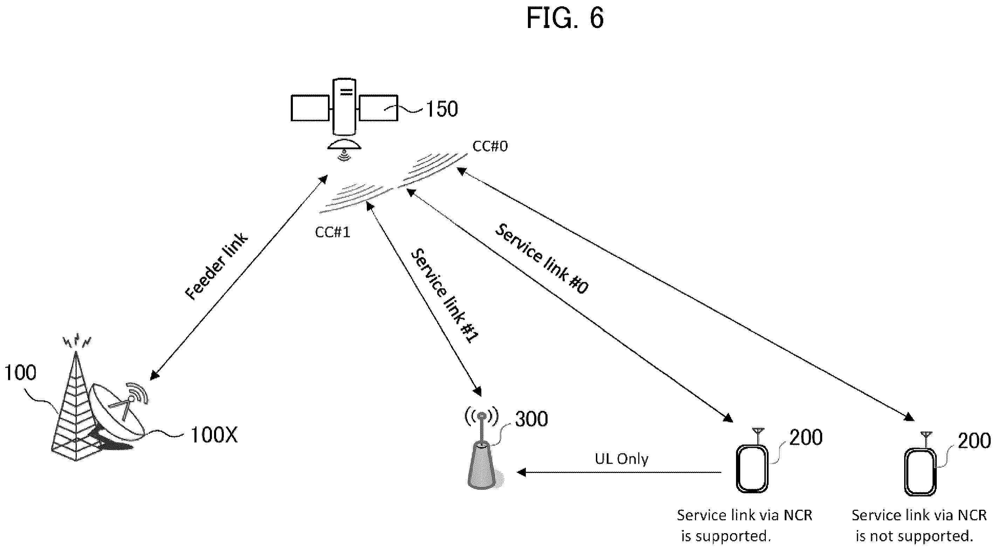

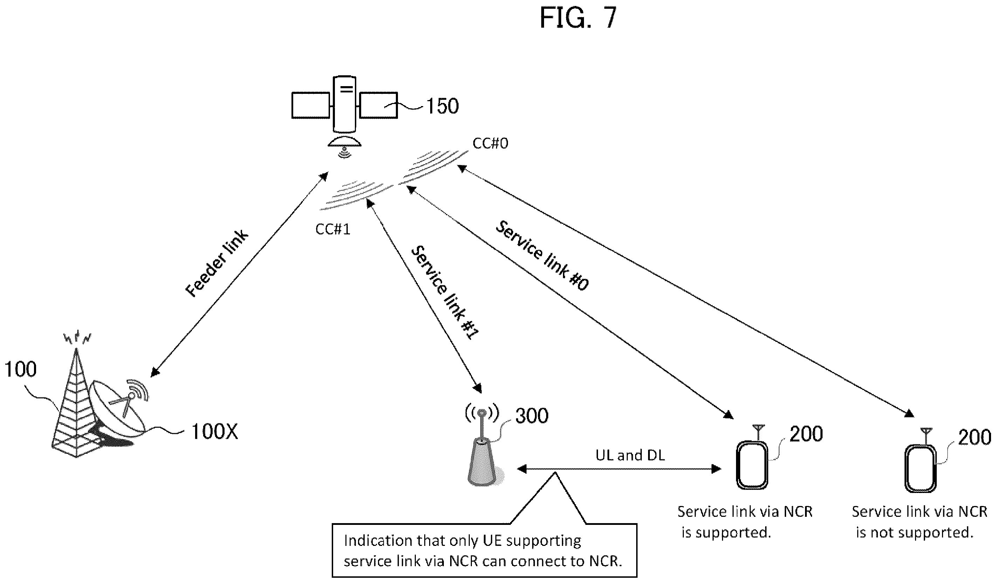

FIG. 6 illustrates a usage example (1) of an NCR relay link in Operation Example 2. FIG. 7 illustrates a usage example (2) of an NCR relay link in Operation Example 2.

Specifically, FIG. 6 corresponds to (a1) of Operation Example 2. As illustrated in FIG. 6, the NCR 300 need relay only the UL signal of the UE 200, and need not relay the DL signal.

FIG. 7 corresponds to Operation Example 2 (b). As illustrated in FIG. 7, the UE 200 may determine whether to execute an operation related to an initial access on the NCR relay link based on a notification (instruction) from the network.

(c) The UE 200 may receive information related to the TA value for the link between the satellite and the NCR. Then, the UE 200 calculates and applies the TA value for the link based on the received information.

The TA value may be calculated based on a parameter given in the same format as the common TA parameter for the feeder link. That is, the TA value and the Xth derivative may be applied (change of the TA value is tracked).

Alternatively, the TA value may be calculated in the same manner as the UE-specific TA applied to the direct link between Satellite and UE. That is, the position information of the NCR and the satellite ephemeris may be provided to the UE, and the TA value may be calculated based on the information.

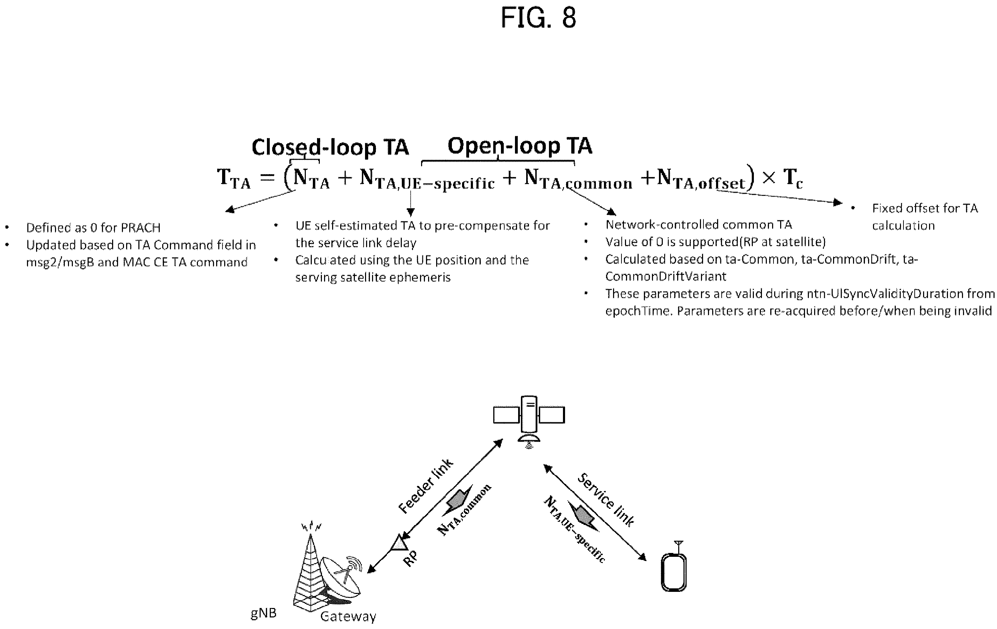

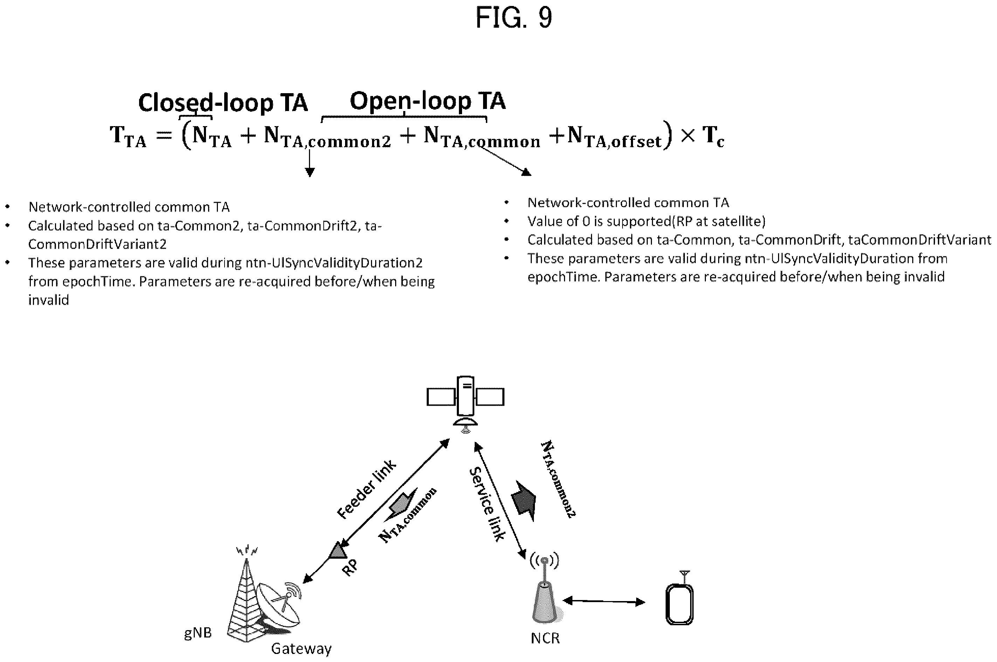

FIG. 8 illustrates an example of a formula for calculating a TA value (when a direct link between satellite and UE is used). FIG. 9 illustrates an example of a formula for calculating a TA value (when an NCR relay link is used).

Further, the UE 200 may receive information related to the TA value for the link between the satellite and the NCR via the SIB including the common TA parameter for the feeder link. The UE 200 may receive information related to the TA value for the link between the satellite and the NCR as a parameter combined with the common TA parameter for the feeder link. The UE 200 may receive information related to the TA value for the link between the satellite and the NCR via UE-specific signaling.

A validity duration of the information related to the TA value for the link between the satellite and the NCR may be determined by the same parameter as the validity duration of the common TA parameter for the feeder link, or by a different parameter. Further, regarding the information related to the TA value for the link between the satellite and the NCR, the information related to each NCR may be provided by common signaling among UEs, and which NCR information should be used may be notified to each UE 200 via UE-specific signaling. Alternatively, regarding the information related to the TA value for the link between the satellite and the NCR, the information related to each NCR and the geographic information of each NCR may be provided by common signaling among UEs. Each UE 200 may determine which NCR information to use based on the geographic information and the location information of the UE 200 itself.

The TA value based on the common TA parameter for the feeder link may also be applied in the same manner as in 3GPP Release 17 and 18 UEs. The UE-specific TA applied to the direct link between the satellite and the UE in 3GPP Release 17 and 18 need not be applied in the case of communication using the NCR relay link.

Moreover, the TA corresponding to a propagation delay between the NCR and the UE may be understood to be included in the structure of the terrestrial network, specifically, N_TA + N_TA, offset (see TS38.211, or the like).

(d) A UE capability may be defined as for whether or not the connection can be made via the NCR relay link, and the UE 200 may report the UE capability to the network.

(4) Operation and Effect

According to the embodiments described above, the following operation and effect are obtained. Specifically, the control unit 330 of the NCR 300 may apply a specific time offset to determine a timing to start or stop application of the notification in a case of routing via the NTN as compared to a case of routing via the TN. Therefore, even when using the NTN via the NCR 300, the notification related to beam control and a resource instruction can be applied at a suitable timing while allowing a very large delay. That is, according to the NCR 300, the notification related to beam control and a resource instruction can be applied at a suitable timing even when using the NTN.

In this embodiment, the NCR 300 can determine a timing to start or stop application of the notification based on the reception of a specific MAC-CE and/or DCI. Therefore, the NCR 300 can determine the timing while flexibly responding to the instructions from the network depending on the situation.

In this embodiment, a coefficient related to SCS may be applied to a specific time offset. This provides a more suitable time offset according to the difference in the SCS.

In this embodiment, the timing at which the beam control and resource indication notifications are provided to UL and DL may be different. This provides a more suitable timing according to the difference in the characteristics of the UL and the DL.

Further, the NCR 300 may execute a relay operation only for a frequency related to a specific cell. That is, the UE 200 may control a cell with a specific frequency to transmit and receive a radio signal via the NCR 300. For example, the UE 200 can be controlled to transmit and receive a radio signal via the NCR 300 for a secondary cell or secondary cell group. Further, the UE 200 may perform control to transmit and receive information related to an initial access via the NCR 300. Thus, the target cells that need TA control via the NCR 300 can be limited, and suitable synchronization processing can be executed even when the NCR 300 is introduced in the NTN.

In this embodiment, the UE 200 can determine the TA value for the service link based on information related to the TA value for the link (service link) between the NCR 300 and the satellite 150. Thus, even when the NTN is used via the NCR 300, a suitable TA value to be applied to the service link can be determined.

(5) Other Embodiments

The embodiments have been described above, without limitation to the description of the embodiments, and it is obvious to those skilled in the art that various modifications and improvements can be made.

For example, in the embodiments described above, the non-terrestrial network (NTN) and the terrestrial network (TN) have been distinguished from each other, but the NTN may be interpreted as a network having a relatively larger delay than the TN, or as a network having a relatively longer propagation distance than the TN.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 3 and 4) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

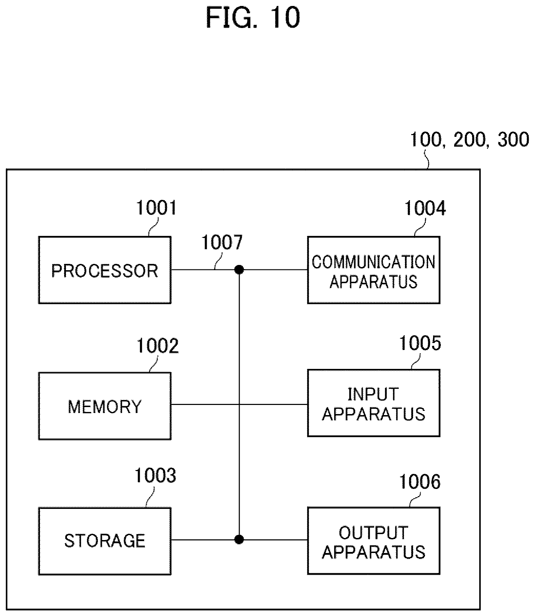

Further, the above-described gNB 100, UE 200 and NCR 300 (the devices) may function as a computer that performs processing of a radio communication method of the present disclosure. FIG. 10 is a diagram illustrating an example of a hardware configuration of the device. As illustrated in FIG. 10, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 3 and 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), W-CDMA(registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." APDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

**In** the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

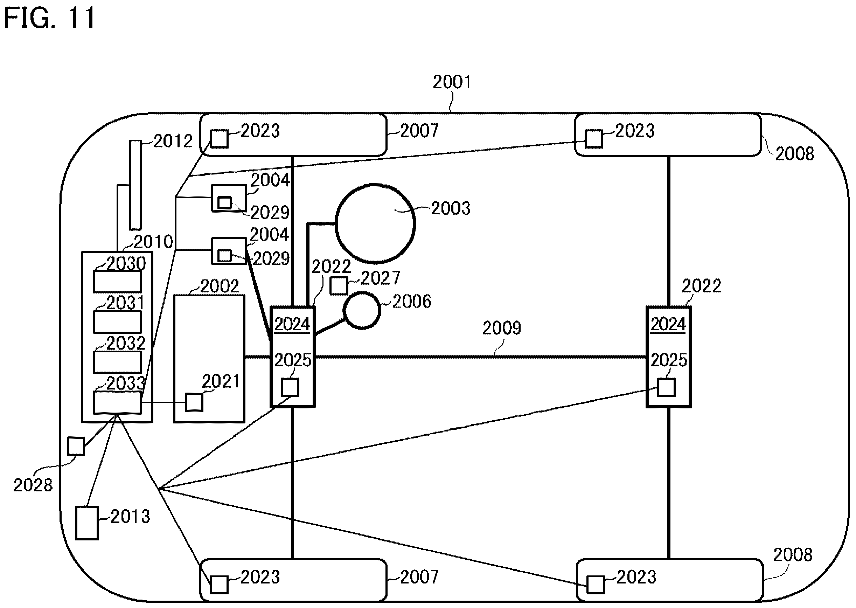

FIG. 11 shows a configuration example of a vehicle 2001. As shown in FIG. 11, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

**EP 4 712 684 A1**

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of the signals from the various sensors 2021 to 2028 input to the electronic control unit 2010, information obtained based on the signals, and information based on input from the outside (user) obtained via the information service unit 2012 to an external device via wireless communication. The electronic control unit 2010, the various sensors 2021 to 2028, the information service unit 2012, etc. may be called an input unit that accepts input. For example, the PUSCH transmitted by the communication module 2013 may include information based on the above input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

(Supplementary Notes)

The disclosure above may be expressed as follows. A first feature is a relay device including a reception unit that receives a notification related to at least one of beam control or a resource instruction; and a control unit that applies a specific time offset in a case of routing via a non-terrestrial network as compared to a case of routing via a terrestrial network, and determines a timing to start or stop application of the notification.

In a second feature according to the first feature, the reception unit receives a control element of a medium access control layer including at least one of resource information or a beam instruction regarding an access link between a terminal and the relay device, and the control unit applies the specific time offset in a case of routing via the non-terrestrial network, and determines a timing to start or stop application of the resource or a beam.

In a third feature according to the first or second feature, the reception unit receives downlink control information including at least one of dynamic resource information or a beam instruction regarding an access link between a terminal and the relay device, and the control unit applies the specific time offset in a case of routing via the non-terrestrial network, and determines a timing to start or stop application of the resource or a beam.

In a fourth feature according to any one of the first to third features, the control unit applies a coefficient related to subcarrier spacing to the specific time offset.

In a fifth feature according to any one of the first to fourth features, the control unit determines the timings differing between uplink and downlink.

A sixth feature is a terminal including a transmission/reception unit that transmits and receives a radio signal via a relay device connected to a non-terrestrial network or without the relay device; and a control unit that controls a transmission and reception of the radio signal via the relay device for a specific frequency cell.

In a seventh feature according to the sixth feature, the control unit controls a transmission and reception of the radio signal via the relay device for a secondary cell or a secondary cell group.

In an eighth feature according to the sixth or seventh feature, the control unit perform control to transmit and receive information related to an initial access via the relay device.

In a ninth feature according to any one of the sixth to eighth features, the transmission/reception unit receives information related to a timing adjustment value for a link between the relay device and a satellite, and the control unit determines a timing adjustment value for the link based on the information.

A tenth feature according to any one of the sixth to ninth features, the transmission/reception unit transmits capability information indicating whether or not the terminal can transmit and receive the radio signal via the relay device.

Reference Signs List

10 Radio communication system
20 NG-RAN
100 gNB
150 Satellite
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
300 NCR
310 MT unit
320 Forwarding unit
330 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

**Claims**

1.  A terminal comprising:

    a transmission/reception unit that transmits and receives a radio signal via a relay device connected to a non-terrestrial network or without the relay device; and
    a control unit that controls a transmission and reception of the radio signal via the relay device for a specific frequency cell.

2.  The terminal according to claim 1, wherein the control unit controls a transmission and reception of the radio signal via the relay device for a secondary cell or a secondary cell group.

3.  The terminal according to claim 1, wherein the control unit performs control to transmit and receive information related to an initial access via the relay device.

4.  The terminal according to claim 1, wherein

    the transmission/reception unit receives information related to a timing adjustment value for a link between the relay device and a satellite, and
    the control unit determines the timing adjustment value for the link based on the information.

5.  The terminal according to claim 1, wherein the transmission/reception unit transmits capability information indicating whether or not the terminal can transmit and receive the radio signal via the relay device.

6.  A radio communication method in a terminal, comprising:

    a step of transmitting and receiving a radio signal via a relay device connected to a non-terrestrial network, or without a relay device; and
    a step of controlling to transmit and receive the radio signal via the relay device for a specific frequency cell.

FIG. 1

EP 4 712 684 A1

## FIG. 2

# FIG. 3

100, 200

210 RADIO SIGNAL TRANSMISSION/ RECEPTION UNIT

220 AMPLIFIER UNIT

240 CONTROL SIGNAL/ REFERENCE SIGNAL PROCESSING UNIT

230 MODULATION/ DEMODULATION UNIT

250 ENCODING/ DECODING UNIT

260 DATA TRANSMISSION/ RECEPTION UNIT

CONTROL UNIT 270

EP 4 712 684 A1

# FIG. 4

From/To: gNB { Control link / Backhaul link

From/To: UE    Access link

300

310  MT UNIT

320  FORWARDING UNIT

330  CONTROL UNIT

EP 4 712 684 A1

FIG. 5

EP 4 712 684 A1

FIG. 6

Feeder link

150

CC#0

CC#1

Service link #0

Service link #1

300

UL Only

100X

100

200

200

Service link via NCR is not supported.

Service link via NCR is supported.

# FIG. 7

CC#0

150

CC#1

Feeder link

Service link #0

Service link #1

100

100X

((·)) 300

UL and DL

200

200

Indication that only UE supporting
service link via NCR can connect to NCR.

Service link via NCR
is supported.

Service link via NCR
is not supported.

EP 4 712 684 A1

# FIG. 8

$$T_{TA} = \left(\underbrace{N_{TA}}_{\text{Closed-loop TA}} + \underbrace{N_{TA,UE-\text{specific}} + N_{TA,common}}_{\text{Open-loop TA}} + N_{TA,offset}\right) \times T_c$$

**Closed-loop TA**

**Open-loop TA**

- Defined as 0 for PRACH
- Updated based on TA Command field in msg2/msgB and MAC CE TA command

- UE self-estimated TA to pre-compensate for the service link delay
- Calculated using the UE position and the serving satellite ephemeris

- Network-controlled common TA
- Value of 0 is supported(RP at satellite)
- Calculated based on ta-Common, ta-CommonDrift, ta-CommonDriftVariant
- These parameters are valid during ntn-UlSyncValidityDuration from epochTime. Parameters are re-acquired before/when being invalid

- Fixed offset for TA calculation

gNB    Gateway

Feeder link   $N_{TA,common}$   RP

Service link   $N_{TA,UE-specific}$

# FIG. 9

$$\underbrace{\phantom{T_{TA} = (}}_{\textbf{Closed-loop TA}} \quad \overbrace{\phantom{N_{TA,common2} + N_{TA,common}}}^{\textbf{Open-loop TA}}$$

$$T_{TA} = (N_{TA} + N_{TA,common2} + N_{TA,common} + N_{TA,offset}) \times T_c$$

- Network-controlled common TA
- Calculated based on ta-Common2, ta-CommonDrift2, ta-CommonDriftVariant2
- These parameters are valid during ntn-UlSyncValidityDuration2 from epochTime. Parameters are re-acquired before/when being invalid

- Network-controlled common TA
- Value of 0 is supported(RP at satellite)
- Calculated based on ta-Common, ta-CommonDrift, taCommonDriftVariant
- These parameters are valid during ntn-UlSyncValidityDuration from epochTime. Parameters are re-acquired before/when being invalid

gNB
Gateway

Feeder link
$N_{TA,common}$
RP

Service link
$N_{TA,common2}$

NCR

EP 4 712 684 A1

# FIG. 10

100, 200, 300

1001

1007

1004

PROCESSOR

COMMUNICATION
APPARATUS

1002

1005

MEMORY

INPUT
APPARATUS

1003

1006

STORAGE

OUTPUT
APPARATUS

FIG. 11

# EP 4 712 684 A1

<table>
<tr><td colspan="2" align="center"><b>INTERNATIONAL SEARCH REPORT</b></td><td>International application No.<br><br><b>PCT/JP2023/017631</b></td></tr>
</table>

**A.    CLASSIFICATION OF SUBJECT MATTER**

*H04W 84/06*(2009.01)i; *H04W 8/22*(2009.01)i; *H04W 16/26*(2009.01)i; *H04W 56/00*(2009.01)i
FI:    H04W84/06; H04W8/22; H04W16/26; H04W56/00

According to International Patent Classification (IPC) or to both national classification and IPC

**B.    FIELDS SEARCHED**

Minimum documentation searched (classification system followed by classification symbols)

H04W84/06; H04W8/22; H04W16/26; H04W56/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2023/047603 A1 (NTT DOCOMO, INC.) 30 March 2023 (2023-03-30) | 1, 3, 6 |
| | paragraphs [0043]-[0049], [0093]-[0103], [0128]-[0136], [0138], fig. 5, 17 | |
| A | | 2, 4-5 |
| A | CATT. Considerations on NTN evolution, [online], 3GPP TSG RAN #99 RP-230405, 13 March 2023 | 1-6 |
| | fig. 2-4 | |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **21 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2023/017631** |

| Patent document cited in search report | Publication date (day/month/year) | Patent family member(s) | Publication date (day/month/year) |
|---|---|---|---|
| WO 2023/047603 A1 | 30 March 2023 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; NR; Radio Resource Control (RRC) protocol specification (Release 17). *3GPP TS 38.331 V17.4.0*, March 2023